# EUROPEAN PATENT APPLICATION

(11) **EP 4 847 210 A1**
(43) Date of publication of application: **02.12.2026**
(21) Application number: 26180610.3
(22) Date of filing: 22.05.2026
(51) Int. Cl.: B25J 9/16, B25J 19/04, G05B 19/418, G06T 7/00

(54) **SYSTEM AND METHOD FOR CHECKING AN EDGE OF A PANEL**

(30) Priority: 26.05.2025 IT 202500012082
(71) Applicant: SCM Group S.p.A., 47921 Rimini (RN) (IT)
(72) Inventor: PIERETTI, Carlo, 47921 Rimini (RN) (IT); BIGOZZI, Emiliano, 47921 Rimini (RN) (IT)
(74) Representative: Gallo, Gianluca

(57) **Abstract**

Described is a system for checking an edge of a panel, comprising a pickup station; a checking station, having a checking zone; and a robot, configured to pick up the panel from the pickup zone and to position the edge of the panel at the checking zone, wherein the checking station comprises one or more optical sensors, configured to check the edge of the panel when positioned at the checking zone; and an enclosure, configured to surround the optical sensors, wherein the enclosure has an opening at the checking zone, so that, when the edge is positioned at the checking zone, the optical sensors are in viewing range with at least a part of the edge of the panel and can check the at least a part of the edge of the panel. The present invention also relates to a method for checking an edge of a panel.

## Description

The present invention relates to a system and a method for checking an edge of a panel.

In the field of machine tools (hereinafter the term "machine" or "machine tool" will be used interchangeably) for the machining of wood, or similar such as, for example, plastic, metals and composites, machines for the machining of panels are known.

The panels are similar to slabs and, therefore, have two main faces, four edges and, for each edge, 4 corners. The edges, and in particular the corners, and the main faces at the edges, may exhibit defects due, for example, to the machining performed on the edges by means of the machine tools. In fact, machining errors, that is, the poor quality of the machining carried out by the machines on the panels, can create, for example, defects, scratches, or chips on the panels, thereby ruining the aesthetic finish of the machined panels. For this reason, it is important to check the integrity, that is, the quality, of the panel before, during and after the machining, by means of the machines, of the panel itself.

For this purpose, checking stations configured to check the integrity, or quality, of the panel are known. The checking stations typically use a plurality of cameras for capturing a sequence of images of the edge of the panel. From the analysis of these images it is possible to evaluate the integrity, that is, the quality, of the panel. The cameras used in the prior art checking stations typically require a special lighting in order to capture images suitable for the subsequent analysis of the integrity, that is, the quality, of the panel.

The number and size of the cameras and of the light sources used in prior art checking stations require large spaces and, therefore, the checking stations are not very compact and are difficult to integrate into the machines or along the machining line of the panels.

Also, the natural lights, that is, the external lights, can often interfere with the checking station and, in particular, with the cameras and the light sources. Also for this reason, the checking stations are not very compact and are difficult to integrate into the machines or along the machining line of the panels.

Also, the machines or the machining lines of the panels are often subject to dust, fine particles, dirt and shavings generated by the machining carried out on the panels themselves. For this reason, these "environments" are not suitable for the use of cameras and light sources, the operation of which may be affected by the presence of dust, fine particles, dirt and shavings. Also for this reason, the checking stations are not very compact and are difficult to integrate into the machines or along the machining line of the panels.

The aim of the present invention is, therefore, to make available a system and a method for checking an edge of a panel, which overcome the above-mentioned drawbacks of the prior art.

In particular, an aim of the present invention to provide a system and a method for checking an edge of a panel, which are robust, so that they can be integrated into an environment characterised by dust, fine particles and shavings.

Further, an aim of the present invention to provide a system and a method for checking an edge of a panel, which are robust, so that they can be integrated into an environment characterised by the presence of natural or external light.

A further aim of the present invention to propose a system and method for checking the edge of a panel that are compact.

Said aims are fully achieved by the system, and by the method for checking an edge, as characterised in the appended claims.

The present invention provides a system for checking an edge of a panel.

The system comprises a pickup station. Further, the system comprises a checking station, having a checking zone. Also, the system comprises a robot, configured to pick up the panel from the pickup zone and to position the edge of the panel at the checking zone. In particular, the checking station comprises one or more optical sensors, configured to check the edge of the panel, when it is positioned at the checking zone. Further, the checking station comprises an enclosure configured to surround, in particular, completely surround, the optical sensors. In this way, the optical sensors are separated and protected from the outside environment, in particular, from the dust and from the shavings generated by the machine for machining the panel, and from the natural light or light outside the checking station. The enclosure has an opening at the checking zone, so that, when the edge is positioned at the checking zone, the optical sensors are within viewing range with at least a part of the edge of the panel and can check the at least a part of the edge of the panel.

Advantageously, the robot can be configured to move the panel, with respect to the checking station, along a checking direction parallel to a main face of the panel, so as to slide the edge of the panel through the checking zone. In particular, the entire edge of the panel can be moved along the checking direction, so that it passes through the checking zone, so as to check the edge of the panel and, in particular, the entire edge of the panel. More advantageously, the system may comprise a controller configured to control the optical sensors as a function of a real trajectory of the panel, in particular as a function of a real position and/or a real speed of the panel over time.

Further, the optical sensors may be configured to capture one or more images of the edge of the panel, and wherein the controller is configured to compensate the images captured as a function of the real trajectory of the panel, in particular as a function of the real position and/or of the real speed of the panel over time.

Also, the optical sensors may be configured to captured a sequence of images of the edge of the panel with a predefined capturing frequency, and wherein the controller is configured to vary the capturing frequency as a function of the real trajectory of the panel, in particular as a function of the real position and/or of the real speed of the panel over time.

**In** particular, the robot may be configured to rotate the panel about an axis perpendicular to the main face of the panel, so as to position a further edge of the panel at the checking zone.

Advantageously, the opening may define an indentation of the enclosure, and wherein the indentation is configured to receive the at least a part of the edge to be checked. **In** particular, the opening can be positioned on the top of the enclosure and oriented so as to have a U-shape.

More advantageously, the opening can have an adjustable width, wherein the panel has a thickness, and wherein the width of the opening is adjustable as a function of the thickness of the panel to be checked.

Further, the pickup station may comprise a panel reference system configured for referencing the panel relative to a known position, so that the robot picks up the panel as referenced by the pickup station.

Also, during the checking of the edge of the panel by the checking station, the panel can always be kept vertical by the robot. The term " vertical " means positioned and oriented substantially so that the main face of the panel is perpendicular to a plane on which the system rests such as, for example, a floor.

The present invention provides a method for checking an edge of a panel by means of a checking station. The checking station comprises a checking zone, one or more optical sensors configured to check the edge of the panel when positioned at the checking zone, and an enclosure, configured to surround the optical sensors. The enclosure has an opening at the checking zone so that, when the edge is positioned at the checking zone, the optical sensors have a viewing range with at least a part of the edge of the panel. Advantageously, the method comprises the following steps of picking up the panel from a pickup station, positioning the edge of the panel at the checking zone, and checking at least a part of the edge of the panel by means of the optical sensors.

More advantageously, the method may comprise the following steps of moving the panel, relative to the checking station, along a checking direction parallel to a main face of the panel, so as to slide the edge of the panel through the checking zone, in particular the entire edge of the panel through the checking zone, and to check the edge of the panel, in particular check the entire edge of the panel.

In particular, the method may comprise the following step of checking the optical sensors as a function of a real trajectory of the panel, in particular as a function of a real position and/or of a real speed of the panel over time.

More particularly, the method may comprise the following steps of capturing one or more images of the edge of the panel, and of compensating the images captured as a function of the real trajectory of the panel, in particular as a function of the real position and/or of the real speed of the panel over time.

Further, the method may comprise the following steps of capturing a sequence of images of the edge of the panel with a predefined capturing frequency, and varying the capturing frequency as a function of the real trajectory of the panel, in particular as a function of the real position and/or of the real speed of the panel over time.

Also, the method may comprise the following step of rotating the panel about an axis perpendicular to the main face of the panel, so as to position a further edge of the panel at the checking zone.

Further, the opening may have an adjustable width, wherein the panel has a thickness, the method comprising the step of adjusting, as a function of the thickness of the panel to be checked, the width of the opening.

Advantageously, the method may comprise the step of referencing the panel with respect to a known position, before picking up the panel from the pickup station.

More advantageously, the method may comprise the step of keeping the panel always vertical, during the checking of the edge of the panel by the checking station.

These and other features of the invention will become more apparent from the following detailed description of a preferred, non-limiting example embodiment of it, with reference to the accompanying drawings, in which:
- Figure 1 illustrates a schematic view of a system for checking an edge of a panel according to the invention; and
- Figure 2 illustrates a schematic view of an internal detail of the system for checking an edge of a panel according to the invention.

Identical reference numerals will be used in the drawings for similar elements.

Moreover, the directional terminology, such as "right", "left", "front", "rear", "base", "top", "upper", "lower", "side", etc., is used below with reference to the accompanying drawings. Since components and/or elements and/or embodiments of this invention may be disposed and/or made to operate in various different orientations, the directional terminology is used purely by way of a non-limiting example.

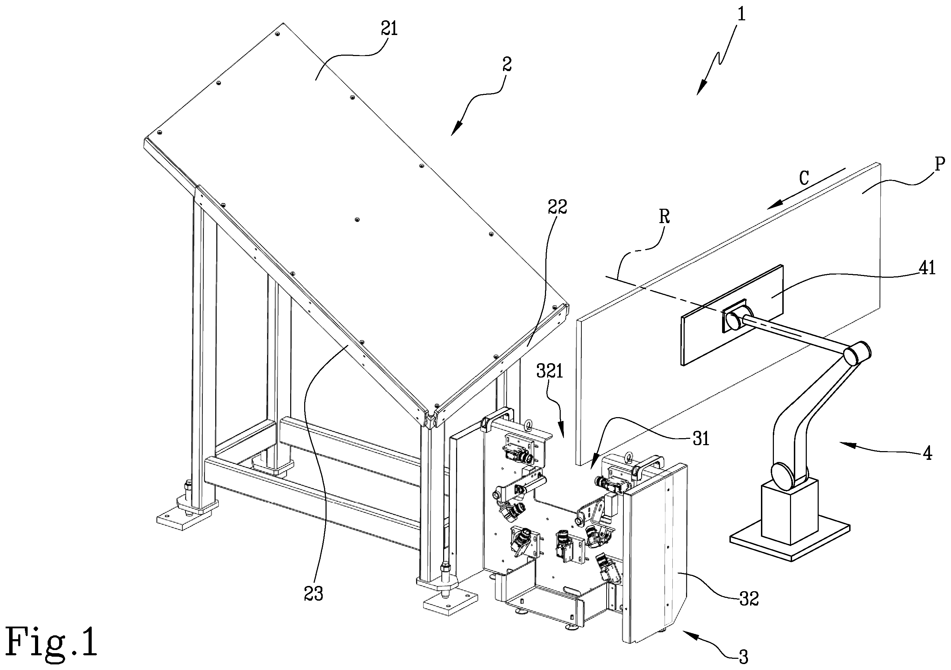

Figure 1 shows an example of a system 1 for checking an edge of a panel P.

The present invention always makes reference below to the checking of the edge of panel P. The checking of the edge of the panel P also includes the checking of the main face(s), in particular in the vicinity of the edge to be checked, and in particular also the checking of one or more corners of the edge to be checked, while remaining within the scope of protection of the appended claims.

Further, the present invention always makes reference to the checking of the edge of the panel P machined by the machine tool, that is, after panel the P has been machined by a machine. However, it is clear that the system 1 and the method for checking the edge of panel P, according to the present invention, can also be used for checking the integrity, that is, the quality, of the panel P before it has been machined by the machine, that is, when entering the machine, while remaining within the scope of protection of the appended claims. For this reason, it is possible to provide a system 1 positioned and configured so as to check the panel P entering the machine (before the machining), a system 1 positioned and configured so as to check the panel P coming out from the machine (after the machining), or a system 1 positioned and configured so as to check the panel P entering and coming out from the machine (before and after the machining).

The panel P is similar to a slab and, therefore, has a first main face and a second main face opposite to the first main face. Also, the panel P has two long edges, that is, a first long edge and a second long edge opposite the first long edge, the long edges being the sides parallel to the length of the panel P. Further, the panel P has two short edges, that is, a first short edge and a second short edge opposite the first short edge, the short edges being the sides parallel to the width of the panel P. The edges of the panel P have two long corners, that is, a first long corner and a second long corner opposite the first long corner, the long corners being parallel to the length or to the width of the panel P. Further, the edges of the panel P have two short corners, that is, a first short corner and a second short corner opposite the first short corner, the short corners being parallel to the thickness of the panel P.

The system 1 comprises a pickup station 2. The pickup station 2 may comprise a referencing system configured for referencing the panel P relative to a known position. In particular, as shown in Figure 1, the referencing station may comprise an inclined plane 21, a lower reference 22 and a lateral reference 23. The inclined plane 21 is a surface configured to support the panel P. The lower reference 22 is a stop located on a base edge of the inclined plane 21. The lateral reference 23 is a stop located on a lateral edge of the inclined plane 21. The inclined plane 21 is inclined relative to a supporting surface of the machine, such as a floor, so that, by gravity, any panel P resting on the inclined plane 21 will slide towards the lower reference 22 and the lateral reference 23. In this way, any panel P is referenced relative to a known position, that is, relative to the lower reference 22 and to the lateral reference 23.

In another example, the pickup station 2 can be, for example, a portion of a conveyor system forming part of a machining line for panels, or in general a supporting surface positioned, for example, in the vicinity of an outlet or an inlet of the machine tool for the machining of the panel P. In a further example, the pickup station 2 can be a storage units for panels, a pallet for the stacking of panels or, simply, an area of the floor.

Again with reference to Figure 1, the system 1 comprises a checking station 3.

The checking station 3 comprises a checking zone 31.

Also, the checking station 3 comprises one or more optical sensors 33 configured to check the edge of the panel P when positioned at the checking zone 31.

Further, the checking station 3 comprises an enclosure 32 configured to surround the optical sensors 33. In this way, the enclosure allows the optical sensors 33 to be isolated from the outside environment surrounding the checking station 3. For this reason, the optical sensors 33 are isolated and protected, for example, from any dust and/or shavings. Also, the optical sensors 33 are isolated and protected, for example, from the natural light and/or artificial light outside the enclosure 32.

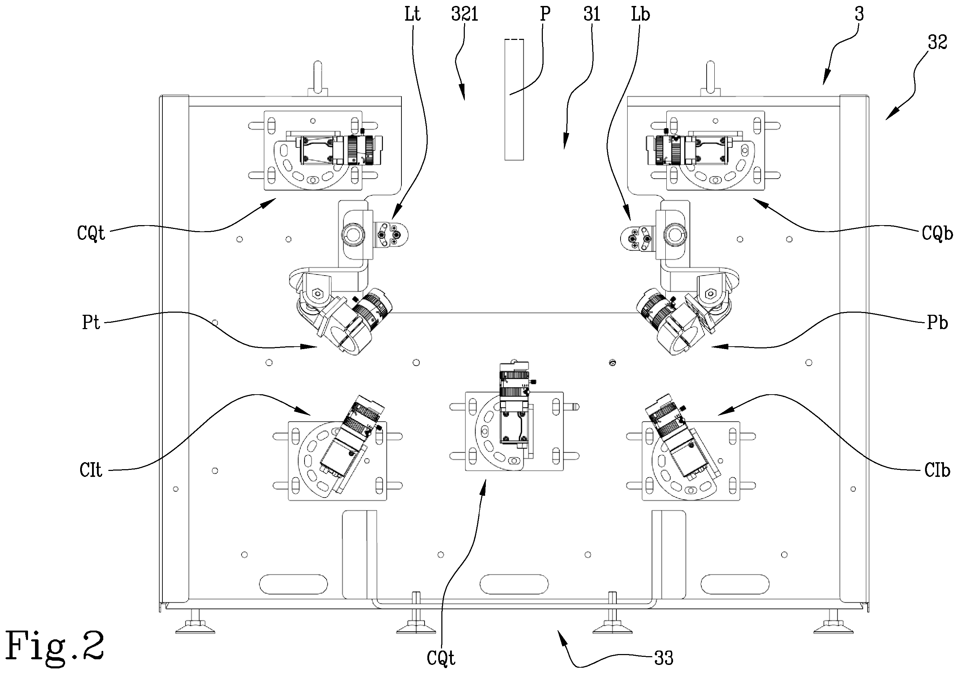

Figure 2 shows the internal space of the enclosure 32.

With particular reference to Figure 2, the enclosure 32 has an opening 321 at the checking zone 31, so that, when the edge of the panel P is positioned at the checking zone 31, the optical sensors 33 are in viewing range with at least part of the edge of the panel P and can check at least a part of the edge of the panel P. The enclosure 32 can have, for example, a substantially parallelepiped shape. Further, the opening 321 may be located, for example, at a top portion of the enclosure 32. Further, the opening 321 may define an indentation of the enclosure 32. For example, the opening 321 may have a substantially U-shape. The indentation may be configured to receive at least a portion of the edge of the panel P to be checked. In particular, the checking zone 31 can be positioned at the opening 321, in particular at, that is, inside, the indentation of the enclosure 32, more in particular at, that is, inside, the U-shaped opening 321. At least a portion of the edge of the panel P can be positioned at the checking zone, that is, at the opening 321, in particular at, that is, inside, the indentation of the enclosure 32, more in particular at, that is, inside, the U-shaped opening 321. By moving the panel P along a checking direction parallel to a main face of the panel P, in particular to the first main face of the panel P, it is possible to position, over time, the entire edge of the panel P to be checked at the checking zone 31. Over time, the optical sensors 33 are in viewing range with the edge of the panel P, in particular with the entire edge of the panel P to be checked. In this way the optical sensors 33 can check, over time, that is, by means of a time scan, the edge of the panel P, in particular the entire edge of the panel P, when positioned, over time, at the checking zone 31. Further, the opening 321 may have an adjustable width. For example, the enclosure 31 may have one or more bulkheads, for example, bellows or telescopic type, (not shown in the drawings) at the opening 321. In this way, the width of the opening 321 can be adjusted according to the thickness of the panel P to be checked. By adjusting the width of the opening 321 (for example, by moving the bulkheads) so that it is slightly larger than the thickness of the panel P, it is possible to improve the isolation provided by the enclosure 32, at the opening 321, when the panel P is positioned at the checking zone 31. Also, the bulkheads may be configured to completely close the opening 321 when the checking station 3 is not in operation, so as to completely isolate the space inside the enclosure 32. Further, at least a portion of a perimeter of the opening 321, in particular, the entire perimeter of the opening 321, may have a plurality of brushes (not shown in the drawings), so as to improve the isolation provided by the enclosure 32 at the opening 321.

Again with particular reference to Figure 2, if the system 1 is used for checking the edge of the panel P coming out from the machine, that is, after the machine machines the panel P, the optical sensors 33 may comprise, for example:
- a first camera CQt, assisted by a first light source Lt, configured for capturing one or more images (time scan) of the first main face of the panel P, in particular, in the vicinity of the edge of the panel P to be checked;
- a second camera CQb, assisted by a second light source Lb, configured for capturing one or more images (time scan) of the second main face of the panel P, in particular, in the vicinity of the panel P to be checked;
- a third camera CQf, assisted by the first light source Lt and the second light source Lb, configured for capturing one or more images (time scan) of the edge of the panel P to be checked;
- a fourth camera Clt, assisted by a first structured light source Pt, configured for capturing one or more images (time scan) of the first main face of the panel P, in particular, in the vicinity of the panel P to be checked, and of the edge of the panel P to be checked; and
- a fifth camera Clb, assisted by a second structured light source Pt, configured for capturing one or more images (time scan) of the second main face of the panel P, in particular, in the vicinity of the panel P to be checked, and of the edge of the panel P to be checked.

If the system 1 is used to check the edge of the panel P entering the machine, that is, before the machine machines the panel P, the optical sensors 33 can be configured and/or checked as follows, for example:
- the first camera CQt may not be present or may be disabled, for example, by the controller;
- the second camera CQb may not be present or may be disabled, for example, by the controller;
- the third camera CQf may not be present or may be disabled, for example, by the controller;
- the first structured light source Pt may not be present or may be disabled, for example, by the controller;
- the second structured light source Pb may not be present or may be disabled, for example, by the controller;
- a fourth camera Clt, assisted by the first light source Lt, may be controlled for capturing one or more images (time scan) of the first main face of the panel P, in particular, in the vicinity of the panel P to be checked, and of the edge of the panel P to be checked; and
- a fifth camera Clb, assisted by the second structured light source Lb, may be controlled for capturing one or more images (time scan) of the second main face of the panel P, in particular, in the vicinity of the panel P to be checked, and of the edge of the panel P to be checked.

With particular reference to the example shown in Figure 1, the system 1 comprises a robot 4. The term "robot" means generically a manipulator having one or more degrees of freedom and comprising an *end effector 41* to interact with an object such as, for example, the panel P. For example, the robot can be Cartesian, anthropomorphic, cylindrical, SCARA or polar. The robot 4 is configured to pick up the panel P from the pickup zone 2 and to position the edge of the panel P to be checked at the checking zone 31. The robot 4 comprises an *end effector* 41 configured to be able to interact with the panel P. In particular, the end effector 41 can be configured to grip the panel P, more particularly the end effector 31 can be configured to grip a main face of the panel P. For example, the end effector 41 can have one or more suction cups configured to grip the panel P.

Once the robot 4 has gripped the panel P, the robot 4 can be configured to move the panel P, with respect to the checking station 3, along the checking direction C parallel to a main face of the panel, so as to slide the edge of the panel P through the checking zone 31, in particular so as to slide the entire edge of the panel P through the checking zone 31, so as to check the edge of the panel P by means of the optical sensors 33.

Further, once the robot 4 has gripped the panel P, the robot 4 may be configured to rotate the panel P about an axis R perpendicular to the main face of the panel P, so as to position a further edge of the panel at the checking zone. In this way it is possible to rotate the panel P, so as to be able to check, by means of the checking station 3, any of the edges of the panel P.

Advantageously, during the checking of the edge of the panel P by means of the checking station 3, the robot 4 can keep the panel P always vertical, that is, with a main face of the panel P perpendicular to the plane on which the system 1 rests, such as, for example, the floor. In order to do this, it may be advantageous for the opening 321 to be positioned at the top portion of the enclosure 32. By keeping panel P always vertical, the system 1 is particularly compact with respect to a system configured to check an edge of a panel always kept horizontal during the checking steps.

In one example, the robot 4 can be used, as well as for checking the panel P as it enters and/or exits the machine tool for machining the panel P, also for loading and/or unloading the machine itself. In another example, the robot 4 can be distinguished from a possible further robot configured for the loading and/or unloading of the machine tool for machining the panel P. This latter example yields high productivity levels. In this case, there may be a conveying system, for example roller conveyors or a conveyor belt, to transport the panel P from the robot 4 to the robot configured for the loading and/or unloading of the machine.

Further, the system 1 may comprise a controller (not shown in the drawings). The controller may be connected to the checking station 3, in particular, to the optical sensors 33. The controller can be configured to control the optical sensors 33 according to a real trajectory of the panel P. The term "trajectory" means the set of positions that the panel P adopts over time within a workspace. For this reason, the trajectory can be defined by a series of positions and by the speed.

The term "real trajectory" means the series of positions effectively adopted by the panel P (real positions) and the real speed at which the panel P is moved (real speed), which may differ from the theoretical ones commanded to the robot 4.

In a first example, the real trajectory, that is, the real positions and the real speed, of the panel P can be provided by the robot 4 to the controller. In this case, the controller can be advantageously connected to the robot 4. In a further example, the real trajectory, that is, the real positions and the real speed, of the panel P may be detected by one or more sensors. In this case, the controller can be advantageously connected to the sensors.

The optical sensors 33 may be configured to capture one or more images of the edge of the panel P. In this case, the controller may be configured to compensate the images captured by the optical sensors 33 as a function of the real trajectory of the panel P, in particular as a function of the real position and/or the real speed of the panel P over time. In fact, the optical sensors 33 are configured to capture the images of the edge of the panel P when it is in the checking zone 31, in particular in a certain theoretical position. During the movement of the panel P by the robot 4, for example, along the checking direction C, the real position of the edge of the panel P may be different from the theoretical position. For this reason, the image captured may have an error and/or a distortion. However, since the real position is known, the controller can compensate the image captured by the optical sensors 33 so as to obtain images suitable for checking the edge of the panel P.

Further, the optical sensors 33 may be configured to capture a sequence of images of the edge of the panel P with a predefined capturing frequency. In this case, the controller may be configured to vary the capturing frequency as a function of the real trajectory of the panel P, in particular as a function of the real position and/or the real speed of the panel P over time. In fact, the optical sensors 33 are configured to capture the images of the edge of the panel P, when it is in the checking zone 31, at predetermined moments of time. A synchronization signal characterised by the capturing frequency controls/synchronises the optical sensors 33. During the movement of the panel P by the robot 4, for example, along the checking direction C, the real speed of the edge of the panel P may be different from the theoretical speed.

For this reason, the captured image may have an error and/or a distortion due to the incorrect synchronism of the time scanning of the edge of the panel P. However, since the real speed is known, the controller may vary the capturing frequency of the synchronism signal of the optical sensors 33 as a function of the real trajectory of the panel P, in particular as a function of the real position and/or of the real speed of the panel P over time.

A brief description is given below of an example of the operation of the system 1 for checking the edge of the panel P.

The robot 4 picks up the panel P from a storage zone, which can be, for example, the outlet of a machine tool that has previously machined the edge of the panel P. This step is optional.

Subsequently, the robot releases the panel P on the inclined plane 21 of the pickup station. The panel P slides on the inclined plane 21 and abuts on the lower reference 22 and on the lateral reference 23. In this way, the panel is referenced with respect to a known position. This step is optional.

The robot 4 picks up the panel P, in particular the panel P referenced with respect to the known position. For this reason, the position and the orientation in space of panel P, gripped by robot 4, are known.

Subsequently, the robot 4 positions the edge of the panel P, in particular a first end of the edge of the panel P, at the checking zone 31 of the checking station 3.

The optical sensors 33 are in viewing range with the at least a part of the edge of panel P, in particular of the first end of the edge of the panel P.

Further, the robot 4 moves the panel P along the checking direction C, in particular from the first end to a second end, opposite the first end, of the edge of panel P.

During the movement of the panel P along the checking direction C, the checking station 3 checks the edge of panel P. In particular, the optical sensors 33 capture a sequence of images of the edge of the panel P at a predefined capturing frequency.

During the movement of panel P along the checking direction C, the controller determines, in particular detects by means of one or more sensors, the real trajectory of the panel P, in particular the real position and/or a real speed of the panel P over time.

The controller compensates the images captured as a function of the real trajectory of the panel P, in particular as a function of the real position and/or of the real speed of the panel P over time.

Further, the controller varies the capturing frequency as a function of the real trajectory of the panel P, in particular as a function of the real position and/or of the real speed of the panel P over time.

Once the checking of the edge of panel P is completed, the controller can provide, that is, can make available, to an operator, information relating to the result of the checking. In particular, the controller can generate a series of alarms, containing, for example, information relating to one or more defects detected on the edge of the panel P by the checking station 3. For example, the alarms may comprise the captured images of the detected defects. Further, the alarms can contain the type of defects detected. The information, or alarms, may be displayed to the operator by means of an operator interface such as, for example, a monitor or a light indicator. Further, the information, or the alarms, may be sent, for example, to a cloud server, a PC, a PC of the machine tool, and/or a mobile device such as, for example, a smartphone.

If it is desired to check a further edge of the panel P, the robot 4 can rotate the panel about the axis R and can position the further edge of the panel P at the checking zone 31 of the checking station 3. The steps described above to check the edge of panel P can be repeated, *mutatis mutandis,* for the further edge of panel P.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A system (1) for checking an edge of a panel (P), comprising:
- a pickup station (2);
- a checking station (3) having a checking zone (31); and
- a robot (4), configured to pick up the panel (P) from the pickup zone (2) and to position the edge of the panel (P) in the checking zone (31), wherein the checking station (3) comprises:
- one or more optical sensors (33), configured to check the edge of the panel (P) when it is positioned in the checking zone (31); and
- an enclosure (32), configured to surround the optical sensors (33),
wherein the enclosure (32) has an opening (321) in the checking zone (31) so that when the edge is positioned in the checking zone (31), the optical sensors (33) have at least part of the edge of the panel (P) within optical viewing range and can check at least one part of the edge of the panel (P).

2. The system (1) according to claim 1, wherein the robot is configured to move the panel (P) relative to the checking station (3) along a checking direction (C) parallel to a main face of the panel (P) so as to make the edge of the panel (P) move through the checking zone (31), in particular the entire edge of the panel (P) through the checking zone, so as to check the edge of the panel (P).

3. The system (1) according to claim 2, comprising a controller configured to control the optical sensors (33) as a function of a real trajectory of the panel (P), in particular as a function of a real position and/or a real speed of the panel (P) over time.

4. The system (1) according to claim 3, wherein the optical sensors (33) are configured to capture one or more images of the edge of the panel (P), and wherein the controller is configured to compensate the images captured as a function of the real trajectory of the panel (P), in particular as a function of the real position and/or of the real speed of the panel (P) over time.

5. The system (1) according to claim 3 or 4, wherein the optical sensors (33) are configured to capture a sequence of images of the edge of the panel (P) at a predefined capture rate, and wherein the controller is configured to vary the capture rate as a function of the real trajectory of the panel (P), in particular as a function of the real position and/or of the real speed of the panel (P) over time.

6. The system (1) according to any one of the preceding claims, wherein the robot is configured to rotate the panel (P) about an axis (R) perpendicular to the main face of the panel (P), so as to position another edge of the panel (P) in the checking zone (31).

7. The system (1) according to any one of the preceding claims, wherein the opening (321) defines an indentation in the enclosure (32), and wherein the indentation is configured to receive the at least one part of the edge to be checked.

8. The system (1) according to any one of the preceding claims, wherein the opening (321) has an adjustable width, wherein the panel (P) has a thickness, and wherein the width of the opening (321) is adjustable as a function of the thickness of the panel (P) to be checked.

9. The system (1) according to any one of the preceding claims, wherein the pickup station (2) comprises a panel reference system for referencing the panel (P) relative to a known position, so that the robot (4) picks up the panel as referenced by the pickup station (2).

10. The system (1) according to any one of the preceding claims, wherein the robot (4) holds the panel (P) in the vertical position all the time while the check is being performed on the edge of the panel (P) through the checking station (3).

11. A method for checking an edge of a panel (P) through a checking station (3) which comprises a checking zone (31), one or more optical sensors (33) configured to check the edge of the panel (P) when it is positioned in the checking zone (31), and an enclosure (32), configured to surround the optical sensors (33), the enclosure (32) having an opening in the checking zone (31) so that when the edge is positioned in the checking zone (31), the optical sensors (33) have at least part of the edge of the panel (P) within optical viewing range, the method comprising the following steps:
- picking up the panel (P) from a pickup station (2);
- positioning the edge of the panel (P) in the checking zone (31); and
- checking at least one part of the edge of the panel (P) via the optical sensors (33).

12. The method according to claim 11, comprising the following steps:
- moving the panel (P) relative to the checking station (3) along a checking direction (C) parallel to a main face of the panel (P) so as to make the edge of the panel (P) move through the checking zone (31), in particular the entire edge of the panel (P) through the checking zone (31); and
- checking the edge of the panel (P), in particular checking the entire edge of the panel (P).

13. The method according to claim 12, comprising the following step:
- controlling the optical sensors (33) as a function of a real trajectory of the panel (P), in particular as a function of a real position and/or of a real speed of the panel (P) over time.

14. The method according to claim 13, comprising the following steps:
- capturing one or more images of the edge of the panel (P); and
- compensating the images captured as a function of the real trajectory of the panel (P), in particular as a function of the real position and/or of the real speed of the panel (P) over time.

15. The method according to claim 13 or 14, comprising the following steps:
- capturing a sequence of images of the edge of the panel (P) at a predefined capture rate; and
- varying the capture rate as a function of the real trajectory of the panel (P), in particular as a function of the real position and/or of the real speed of the panel (P) over time.
